(19) Europäisches Patentamt / European Patent Office / Office européen des brevets

(11) **EP 2 109 796 B1**

(12) **FASCICULE DE BREVET EUROPEEN**

(45) Date de publication et mention
de la délivrance du brevet:
**10.08.2016 Bulletin 2016/32**

(21) Numéro de dépôt: **08761936.7**

(22) Date de dépôt: **15.01.2008**

(51) Int Cl.:
*G02F 1/1333* (2006.01)   *G02F 1/1334* (2006.01)
*G02F 1/1341* (2006.01)   *G02F 1/167* (2006.01)
*G02C 7/02* (2006.01)   *G02B 26/06* (2006.01)
*G02B 3/12* (2006.01)

(86) Numéro de dépôt international:
**PCT/FR2008/050065**

(87) Numéro de publication internationale:
**WO 2008/099117 (21.08.2008 Gazette 2008/34)**

(54) **COMPOSANT OPTIQUE TRANSPARENT A CELLULES REMPLIES DE MATERIAU OPTIQUE**

TRANSPARENTE OPTISCHE KOMPONENTE MIT MIT EINEM OPTISCHEN MATERIAL GEFÜLLTEN ZELLEN

TRANSPARENT OPTICAL COMPONENT HAVING CELLS FILLED WITH AN OPTICAL MATERIAL

(84) Etats contractants désignés:
**AT BE BG CH CY CZ DE DK EE ES FI FR GB GR
HR HU IE IS IT LI LT LU LV MC MT NL NO PL PT
RO SE SI SK TR**

(30) Priorité: **17.01.2007 FR 0700309**

(43) Date de publication de la demande:
**21.10.2009 Bulletin 2009/43**

(73) Titulaire: **Essilor International
(Compagnie Générale d'Optique)
94220 Charenton-le-Pont (FR)**

(72) Inventeurs:
• **ARCHAMBEAU, Samuel
F-94220 Charenton-Le-Pont (FR)**
• **BOVET, Christian
F-94220 Charenton-Le-Pont (FR)**
• **CANO, Jean-Paul
F-94220 Charenton-LP-pont (FR)**
• **VINSONNEAU, Sylvie
F-94220 Charenton-Le-Pont (FR)**

(74) Mandataire: **Cabinet Plasseraud
66, rue de la Chaussée d'Antin
75440 Paris Cedex 09 (FR)**

(56) Documents cités:
EP-A2- 1 308 770      WO-A-03/012542
US-A- 5 914 802       US-A1- 2003 206 260
US-A1- 2004 114 111   US-A1- 2006 006 336

**Description**

La présente invention concerne un composant optique transparent à cellules remplies de matériau optique, ainsi qu'un composant du type résultant d'un tel procédé.

Il est connu de réaliser un composant optique transparent en formant un ensemble de cellules séparées et juxtaposées parallèlement à une surface du composant (FR 2 872 259). Chaque cellule est remplie avec un matériau optique approprié, de sorte que l'ensemble des cellules ainsi remplies confèrent au composant une fonction optique voulue. Par exemple, la fonction du composant peut être une puissance optique lorsque le matériau qui est contenu dans les cellules possède un indice de réfraction optique variable. Elle peut aussi être une protection antisolaire lorsque le matériau optique est absorbant, ou un renfort de contraste lorsqu'il est polarisant. L'utilisation de cellules séparées permet de varier facilement une intensité de la fonction optique du composant le long de la surface de celui-ci. Eventuellement, le matériau optique qui est contenu dans les cellules peut aussi être un matériau électro-actif, de sorte que la fonction optique du composant peut être contrôlée par une commande électrique.

Le document US 2006/000 6336 A1 divulgue un verre ophtalmique comprenant un film à cellules lui conférant une fonction optique.

Un tel procédé de réalisation d'un composant optique transparent est avantageux, notamment parce qu'il permet d'utiliser un même composant de base à cellules pour obtenir des composants finals qui possèdent des fonctions optiques différentes. Ces fonctions différentes sont obtenues en modifiant le ou les matériau(x) qui est (sont) contenu(s) dans les cellules. Un même modèle de composant de base à cellules peut alors être utilisé pour un grand nombre de composants optiques finals. Il est alors fabriqué en grande série, ce qui contribue à réduire le prix de revient de chaque composant optique.

Un tel procédé est aussi avantageux parce qu'il permet de personnaliser facilement le composant optique en fonction d'un futur utilisateur de celui-ci. La personnalisation est réalisée en adaptant le matériau optique qui est contenu dans les cellules du composant en fonction de caractéristiques déterminées spécifiquement pour cet utilisateur. Une telle personnalisation est particulièrement adaptée lorsque le composant optique est une lentille ophtalmique, destinée à un porteur de lunettes identifié.

Or le remplissage des cellules d'un tel composant avec le matériau optique est susceptible de générer une variation régulière voire périodique à la surface de ce composant. Par exemple, lorsque le matériau optique est liquide, un ménisque peut se former au niveau de la section d'ouverture de chaque cellule, par laquelle le remplissage est effectué. D'autres phénomènes liés au remplissage des cellules peuvent aussi générer une variation régulière ou périodique. Une telle variation même faible peut alors générer une diffusion lumineuse, qui diminue la transparence du composant optique et introduit des défauts dans l'image, tels que par exemple des images parasites, si les variations sont périodiques,

Au sens de l'invention, on considère qu'un composant optique est transparent lorsqu'une image qui est observée à travers ce composant est perçue sans perte significative de contraste. Autrement dit, l'interposition du composant optique transparent entre l'image et un observateur de celle-ci ne réduit pas significativement la qualité de l'image. En particulier, la diffraction est définie comme le phénomène d'éparpillement de la lumière que l'on observe lorsqu'une onde lumineuse est matériellement limitée (J-P. PEREZ - Optique, Fondements et applications - 7ème édition - DUNOD - octobre 2004, p. 262). Si une variation régulière est présente sur le composant, elle provoque une diffraction lumineuse. A cause de cette diffraction, un point lumineux n'est plus perçu comme un point à travers le composant optique. La diffusion macroscopique qui en résulte, ou diffusion incohérente, produit une apparence laiteuse, ou halo de diffusion, de la structure cellulaire du composant optique. En particulier, une source ponctuelle de lumière apparaît à travers le composant optique comme un disque lumineux, ou comme étant entourée d'une ou plusieurs couronne(s) lumineuse(s). Il en résulte une perte de contraste d'une image qui est observée à travers le composant. Cette perte de contraste est assimilée à une diminution de la transparence, telle que définie précédemment. Quand les objets diffractants sont disposés de manière périodique il s'ensuit un effet réseau faisant apparaître des ordres. Ces ordres de diffraction sont à l'origine d'images parasites et diminuent le contraste de l'image donc la transparence du composant. L'image d'une source ponctuelle de lumière est alors entourée de petits points parasites facilement identifiables visuellement sur un fond sombre, même si la fraction de l'énergie lumineuse repartie dans ces images parasites est faible.

Le document US 5,914,802 divulgue un modulateur spatial de lumière ayant des électrodes d'épaisseurs différentes afin d'élliminer la diffraction.

Une telle diminution de transparence est particulièrement défavorable lorsque le composant optique est une lentille ophtalmique, notamment un verre de lunettes.

Un but de la présente invention consiste donc à proposer un procédé de réalisation d'un composant optique à cellules remplies de matériau optique, qui permet d'obtenir un niveau de transparence accru pour le composant. Elle s'applique à un procédé qui comprend les étapes récitées dans la revendication 1.

Selon l'invention, des variations aléatoires ou pseudo-aléatoires des niveaux moyens de remplissage des cellules sont volontairement introduites entre certaines au moins des cellules du composant.

En outre, ces variations des niveaux de remplissage des cellules sont déterminées de sorte que des déphasages subis par des rayons d'une lumière visible qui traversent respectivement les cellules selon la direction perpendiculaire à la surface du composant présentent un écart quadratique moyen qui est inférieur au quart de la longueur d'onde (λ).

Au sens de l'invention, on entend par variations aléatoires ou pseudo-aléatoires des niveaux de remplissage des cellules des variations qui ne présentent pas de régularité apparente sur l'étendue de la surface du composant optique. En particulier, elles ne présentent pas de caractère périodique apparent. De telles variations peuvent être déterminées numériquement. Elles sont alors qualifiées de pseudo-aléatoires, bien qu'elles soient assimilables à des variations aléatoires pour chaque composant optique réalisé.

L'introduction de telles variations aléatoires ou pseudo-aléatoires dans les niveaux de remplissage des cellules, selon une première caractéristique de l'invention, supprime une éventuelle diffusion lumineuse que provoqueraient des phénomènes liés au remplissage trop régulier des cellules, ou réduit cette diffusion à un niveau qui est compatible avec l'utilisation du composant optique. Ainsi un remplissage des cellules avec variation aléatoire ou pseudo-aléatoire permet de limiter l'ordre généré par un réseau dû à un remplissage périodique. Ceci permet d'éviter la formation d'images parasites, du fait notamment d'un étalement de l'énergie lumineuse sur un angle solide plus grand. En conséquence, l'image transmise au travers d'un tel composant optique est meilleure, en terme de transparence, car les points lumineux sont transformés en un halo de diffusion.

On entend aussi par niveau de remplissage d'une cellule le niveau moyen de remplissage de celle-ci lorsque la surface du matériau optique dans la section d'ouverture n'est pas plane ou n'est pas parallèle à la surface du composant. En effet, la surface du matériau optique dans la section d'ouverture de chaque cellule peut avoir une forme variable, qui dépend notamment de la nature du matériau optique. Par exemple, cette surface peut être granulaire lorsque le matériau optique est une poudre, ou être un ménisque concave ou convexe lorsque le matériau optique est un liquide, ou encore être oblique lorsqu'il s'agit d'un gel. Le niveau de remplissage de la cellule est alors déterminé par la hauteur moyenne de la surface du matériau optique dans la section d'ouverture, mesurée selon la direction perpendiculaire à la surface du composant, et moyennée sur l'étendue de la section d'ouverture.

On entend enfin par écart quadratique moyen («root mean square» en anglais) d'une amplitude quelconque, notée φ, la quantité statistique $\Delta_{rms}$ qui est définie de façon usuelle par la formule suivante :

$$\Delta_{rms} = \sqrt{\frac{1}{N-1}\sum_{i=2}^{N}(\varphi_i - \Phi)^2} \qquad (1)$$

où $\varphi_i$ désigne la i-ème mesure de l'amplitude φ, N est le nombre de mesures et Φ est la valeur moyenne de l'amplitude φ estimée à partir de ces mesures. De façon connue, l'écart quadratique moyen $\Delta_{rms}$ qui est ainsi défini peut être confondu avec l'écart-type de l'amplitude φ lorsque le nombre N de mesures est assez grand. Dans le cadre de la présente invention, l'amplitude φ est le déphasage que subit un rayon de lumière visible qui traverse l'une des cellules du composant perpendiculairement à la surface du composant. Chaque mesure i est la valeur de ce déphasage lorsque la cellule considérée varie. Elle dépend du niveau de remplissage de la cellule. Le nombre N de mesures à considérer pour calculer la quantité $\Delta_{rms}$ peut être quelconque, supérieur à 3. En particulier, $\Delta_{rms}$ peut être calculé pour N égal à 6, 10 ou 20.

Selon une seconde caractéristique de l'invention, les déphasages qui correspondent à des cellules différentes du composant optique présentent un écart quadratique moyen qui est inférieur au quart de la longueur d'onde (λ). Grâce à cette contrainte introduite sur l'écart quadratique moyen, les variations des niveaux de remplissage des cellules n'introduisent pas de déformation locale importante d'un front d'onde lumineux, de sorte qu'aucune perte de contraste n'est perceptible. Le composant optique présente alors une qualité optique et un niveau de transparence élevés.

De préférence, les déphasages des rayons lumineux qui traversent les cellules du composant optique présentent un écart quadratique moyen qui est inférieur à un quart, ou un huitième ou un quatorzième de la longueur d'onde (λ). Dans ce dernier cas, environ 68% de l'énergie lumineuse qui est émise par une source de lumière ponctuelle à travers le composant est concentrée dans le disque d'Airy. Ce disque caractérise la diffusion optique du composant, d'une façon qui est connue de l'Homme du métier. La source ponctuelle de lumière est alors perçue comme un point lumineux à travers le composant optique, d'une façon satisfaisante.

Selon un premier perfectionnement de l'invention, le procédé peut comprendre en outre l'étape suivante :

/3/ fermer les cellules de façon étanche au moyen d'une portion d'un matériau de fermeture qui s'étend sur la section d'ouverture de chaque cellule.

Le remplissage des cellules selon l'invention est alors définitivement fixé par une telle fermeture des cellules, et ne varie plus lors d'éventuelles étapes ultérieures de la réalisation du composant, ni lors de l'utilisation de celui-ci.

La transparence du composant qui est obtenue grâce à la mise en oeuvre de l'invention est ainsi permanente.

L'étape /3/ peut comprendre la disposition d'un film transparent sur l'ensemble des cellules, en fixant ce film sur des parois de séparation qui sont situées entre les cellules. De cette façon, toutes les cellules du composant sont fermées en une étape unique, qui est simple et rapide.

Selon un second perfectionnement de l'invention, le composant optique de base peut comprendre une structure en couche qui incorpore elle-même l'ensemble de cellules. Cette structure en couche peut alors être fixée sur un substrat du composant optique après l'étape /2/. La structure en couche peut notamment présenter une configuration générale plane pendant que l'étape /2/ est exécutée, ce qui permet d'introduire plus facilement le matériau optique dans les cellules.

Le composant optique transparent auquel l'invention est appliquée peut être quelconque. Ce peut être une lentille, notamment une lentille d'un appareil de mesure optique ou de visée, un verre de masque de protection ou de sport, une visière de casque, etc. L'application de l'invention à la réalisation d'un verre ophtalmique est particulièrement avantageuse. On entend par verre ophtalmique tout élément optique qui est destiné à être placé devant un oeil d'un porteur, notamment pour corriger la vue de celui-ci, pour améliorer un confort visuel, ou pour accroître une sécurité de celui-ci. Ce peut être une lentille de contact, un implant oculaire ou un verre de lunettes ophtalmiques adapté pour être assemblé avec une monture de paire de lunettes.

L'invention propose aussi un composant optique selon la revendication 11.

Un tel composant optique transparent peut être réalisé, en particulier, en utilisant un procédé tel que décrit précédemment.

D'autres modes de réalisation sont définis dans les revendications dépendantes.

D'autres particularités et avantages de la présente invention apparaîtront dans la description ci-après d'un exemple de mise en oeuvre non limitatif, en référence aux dessins annexés, dans lesquels :

- la figure 1 est une vue en coupe d'un composant optique selon l'invention ; et

- la figure 2 est une vue en coupe de plusieurs cellules qui illustre une détermination des niveaux de remplissage.

Pour raison de clarté de ces figures, les dimensions des différents éléments représentés ne correspondent pas à des dimensions ni des rapports de dimensions réels. Des dimensions qui correspondent à des composants optiques réels conformes à l'invention sont indiquées dans la suite, à titre d'illustration pour permettre de reproduire l'invention à partir de la description qui est donnée. Par ailleurs, il est entendu que les étapes du procédé décrit et les principes optiques évoqués qui sont connus de l'Homme du métier ne sont pas repris en détail, et l'on pourra se reporter si nécessaire à l'un des nombreux documents disponibles sur ces sujets.

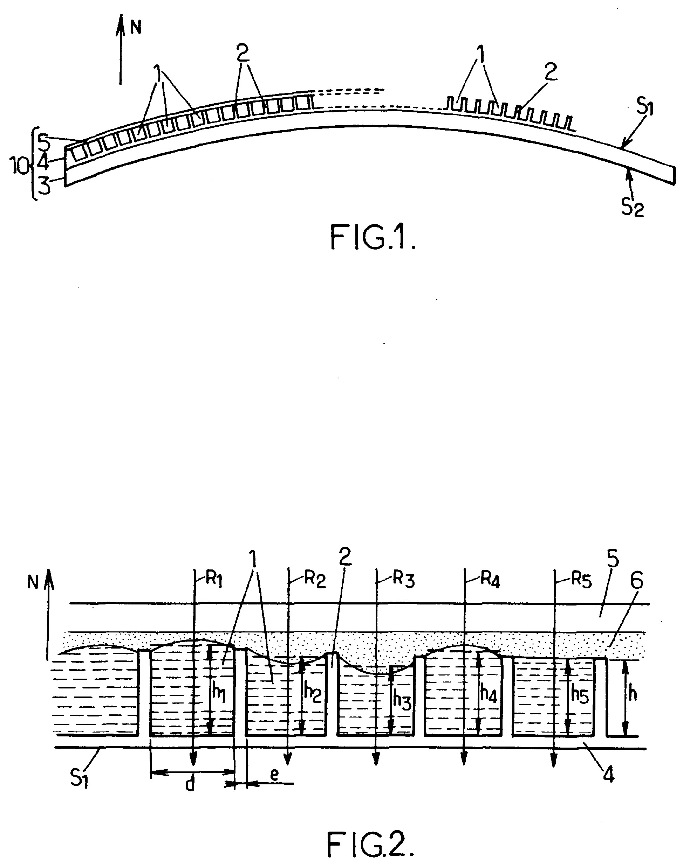

Conformément à la figure 1, une ébauche de verre de lunettes, par exemple de forme circulaire dans un plan perpendiculaire à celui de la figure, peut comporter une face convexe S1 et une face concave S2. Cette ébauche est référencée globalement 10. Les faces S1 et S2 peuvent être parallèles, ou présenter des courbures différentes. L'une d'elles, ou les deux, peut (peuvent) aussi être plane(s). L'ébauche 10 est destinée à être détourée aux dimensions d'un logement de verre ophtalmique d'une monture de paire de lunettes sélectionnée par un futur porteur de celle-ci. Le composant optique final qui est obtenu est alors le verre de lunettes.

L'ébauche 10 comporte un ensemble de cellules 1 qui sont juxtaposées les unes à côté des autres sur la face S1. Les cellules 1 sont séparées par des parois 2 qui forment un réseau sur la face S1. Les parois 2 s'étendent parallèlement à une direction perpendiculaire à la face S1, notée N. L'ébauche 10 peut comprendre un substrat 3 et une structure en couche 4 dans laquelle les cellules 1 sont formées. Le substrat 3 peut être constitué de tout matériau transparent qui est couramment utilisé dans le domaine ophtalmique. Ce matériau peut être, notamment, un matériau minéral, organique ou composite. La structure 4 est rapportée sur le substrat 3, par exemple par collage. Elle peut être en partie en résine lithographique, de sorte que les cellules 1 peuvent être formées en combinant une irradiation et une dissolution sélectives de la résine, en utilisant un procédé connu de l'Homme du métier. Alternativement, les cellules 1 peuvent être formées directement sur le substrat 3.

De façon préférée, et particulièrement lorsque la face du composant optique final qui est destinée à porter l'ensemble de cellules n'est pas plane, le procédé de l'invention est mis en oeuvre avec la structure en couche 4 avant que cette structure soit appliquée sur le substrat 3. La structure 4 peut alors posséder une configuration générale qui est plane, permettant de remplir plus facilement les cellules 1 avec du matériau actif. Le composant optique de base à partir duquel l'invention est mise en oeuvre est alors constitué par la structure en couche 4 sans le substrat 3. De façon générale, le composant optique de base comprend l'ensemble de cellules et, éventuellement, un substrat qui peut être temporaire ou définitif.

Chaque cellule 1 peut être de forme sensiblement cylindrique, d'axe parallèle à la direction N, et de section quelconque. Elle est initialement ouverte d'un côté de la structure 4, qui est le même pour toutes les cellules (voir la partie droite de la figure 1). Elle présente donc une section d'ouverture qui peut être égale à la section de la cellule sur toute sa hauteur, pour faciliter un remplissage de celle-ci. A titre d'exemple, les cellules 1 peuvent avoir des dimensions parallèles à la surface S1, notées d sur la figure 2, qui sont comprises entre 50 et 200 $\mu$m (micromètre), et une hauteur h qui est comprise entre 2 et 50 $\mu$m, mesurée selon la direction N. L'épaisseur e des parois 2 peut être comprise entre 1 et 20 $\mu$m.

Un matériau optique est introduit dans les cellules 1. Il peut être identique ou varier entre des cellules différentes, selon la fonction optique qui est recherchée pour le verre final. La quantité de ce matériau qui est introduite dans chaque cellule est contrôlée. Elle définit le niveau de remplissage de la cellule, qui est repéré selon la direction N et peut être déterminé de diverses manières. Par exemple, le niveau de remplissage d'une cellule peut être contrôlé en temps réel de façon optique, pendant le remplissage. De façon préférée, le niveau de remplissage de chaque cellule est déterminé numériquement, par exemple au moyen d'un calculateur qui commande la quantité de matériau optique à introduire dans cette cellule.

Les niveaux de remplissage respectifs des cellules 1 peuvent varier continûment, ou d'une façon discrète. Par exemple, le matériau optique peut être introduit dans chaque cellule sous forme de multiples portions qui ont chacune un même volume élémentaire. Le niveau de remplissage peut alors être varié facilement entre des cellules différentes en variant le nombre de portions qui sont introduites dans ces cellules. Les variations des niveaux de remplissage qui sont obtenues de cette façon sont multiples du volume élémentaire. Par exemple, ce volume élémentaire peut être compris entre 0,1 et 50 picolitres. Pour des cellules 1 qui ont une section circulaire avec un diamètre d égal à 100 $\mu$m, un volume élémentaire de 6 picolitres correspond à une variation de 0,76 $\mu$m environ du niveau de remplissage moyen d'une cellule.

Selon un mode de mise en oeuvre particulièrement rapide de l'invention, le matériau optique peut être introduit dans chaque cellule en utilisant une buse à projection de matière. Une telle buse, désignée en anglais par «inkjet nozzle» ou «inkjet head», est disponible commercialement et peut être commandée numériquement. Elle est particulièrement adaptée lorsque le matériau optique est un liquide, ou un gel. La buse est déplacée devant l'ensemble des cellules 1 au moyen d'un système de déplacement XY, et est activée lorsqu'elle est en face de la section d'ouverture d'une cellule déterminée, pour projeter dans celle-ci la quantité de matériau optique voulue.

La figure 2 est une vue en coupe de la structure en couche 4, qui fait apparaître des variations du niveau de remplissage des cellules 1. La surface du matériau optique dans la section d'ouverture des cellules peut présenter des formes différentes. Par exemple, lorsque le matériau optique est un liquide, cette surface peut être convexe ou concave, avec une courbure plus ou moins importante. Dans ce cas, le niveau de remplissage d'une cellule correspond à la hauteur moyenne de la surface du liquide, comme représenté sur la figure 2 pour les niveaux notés $h_1$ à $h_5$.

La quantité de matériau optique qui est introduite dans des cellules différentes est variée volontairement, d'une façon aléatoire ou pseudo-aléatoire, de sorte que les niveaux de remplissage des cellules varient en conséquence, aléatoirement d'une cellule à une autre.

On considère alors le déphasage moyen que subit un rayon de lumière visible qui traverse une cellule 1 parallèlement à la direction N. Sur la figure 2, $R_1$,..., $R_5$ désignent les rayons lumineux qui traversent les cellules 1 qui sont représentées. Le déphasage moyen du rayon lumineux qui traverse la cellule i, noté $\varphi_i$, est égal $2\pi \cdot \Delta n \cdot h_i / \lambda$, où $\lambda$ désigne une longueur d'onde de la lumière, et $h_i$ est le niveau moyen de remplissage de la cellule i. $\Delta n$ est la différence entre l'indice de réfraction n du matériau optique qui est contenu dans la cellule i, pour la longueur d'onde $\lambda$, et un indice de réfraction d'un matériau 6 qui est disposé au dessus de cette cellule (voir figure 2). L'écart quadratique moyen de ces déphasages, noté $\Delta_{rms}$ et calculé selon la formule 1 d'après plusieurs cellules 1 identifiées par l'indice i, est sensiblement égal à $2\pi \cdot \Delta n_{rms} / \lambda$, où $h_{rms}$ désigne l'écart quadratique moyen des niveaux de remplissage. Une condition de validité d'une telle estimation de $\Delta_{rms}$ est que les variations des niveaux de remplissage sont, en valeurs relatives, plus importantes que celles de l'indice de réfraction n du matériau optique, si ce dernier varie entre des cellules différentes. A titre d'illustration, la longueur d'onde $\lambda$ peut être prise à 0,55 nm, correspondant à une couleur verte. L'indice moyen n du matériau optique qui est contenu dans les cellules 1 peut être égal à 1,52 pour cette longueur d'onde, et celui du matériau 6 peut être égal à 1, 50. Alors $\Delta n$ est égal à 0,02.

Selon l'invention, les niveaux de remplissage des cellules 1 sont variés de façon contrôlée de sorte que l'écart quadratique moyen $\Delta_{rms}$ est inférieur à $\pi/2$, voire inférieur à $\pi/4$, ou $\pi/7$, c'est-à-dire inférieur au quart de la longueur d'onde ($\lambda$), voire inférieur au huitième de la longueur d'onde, ou au quatorzième de la longueur d'onde. Ce dernier cas conduit à $h_{rms} < 1,96 \ \mu$m pour les valeurs numériques qui ont été citées ci-dessus. Or, pour la plupart des distributions statistiques continues d'une amplitude, l'écart quadratique moyen $\Delta_{rms}$ est compris entre la moitié et un septième de la variation maximale de l'amplitude : $\Delta_{rms}$ est compris entre $\Delta_{max}/7$ et $\Delta_{max}/2$. Autrement dit, $\Delta_{max}$ est compris entre $2 \cdot \Delta_{rms}$ et $7 \cdot \Delta_{rms}$. Dans le cas présent, on obtient des valeurs de $\Delta_{max}$ qui sont comprises entre 1,96 $\mu$m et 6,86 $\mu$m. De telles valeurs maximales des variations des niveaux de remplissage des cellules 1 sont réalisables en utilisant le volume élémentaire de 6 picolitres pour la portion unitaire de matériau optique qui est introduite en une seule fois dans chaque cellule 1. En effet, ce volume élémentaire correspond à une variation de 0,76 $\mu$m du niveau de remplissage d'une cellule, comme indiqué plus haut.

Lorsque le matériau optique et le matériau 6 sont choisis de sorte que $\Delta n$ est égal à 0,15, les valeurs de $\Delta_{max}$ qui sont obtenues de manière similaire à ce qui a été décrit ci-dessus sont encore compatibles avec l'utilisation d'une buse à projection de matière.

Une fois que les cellules 1 sont remplies de matériau optique de la façon qui vient d'être décrite, un film transparent peut être disposé sur l'ensemble des cellules 1, en le fixant sur les parois 2 de manière à fermer chaque cellule de façon étanche. Ce film de fermeture est référencé 5 sur les figures. Il peut être thermoscellé sur les sommets des parois 2 mais, d'une façon préférée, il est collé sur la structure 4 en utilisant une couche intermédiaire 6 d'un matériau adhésif. Le matériau adhésif utilisé peut être un matériau adhésif sensible à la pression, couramment désigné par PSA pour «Pressure Sensitive Material» en anglais. Il est de préférence suffisamment fluide pour se répartir au niveau des sections d'ouverture des cellules 1 en compensant les variations des niveaux de remplissage des cellules. Eventuellement, la structure 4 ainsi assemblée avec le film de fermeture 5 peut être soumise à un rayonnement ultraviolet, pour fixer définitivement le matériau adhésif 6, et ainsi l'assemblage.

Lorsque les cellules 1 ont été remplies avant que la structure en couche 4 soit assemblée avec le substrat définitif 3 de l'ébauche 10, la structure 4 est ensuite fixée sur le substrat 3, par exemple par collage.

Il est entendu que la mise en oeuvre de l'invention qui vient d'être décrite en détail peut être modifiée de diverses façons tout en conservant certains au moins des avantages de celle-ci.

Enfin, il est précisé que le matériau optique qui est introduit dans les cellules peut être de n'importe quel type, et notamment d'un des types déjà utilisés à ce jour dans des composants optiques à cellules.

## Revendications

1. Procédé de réalisation d'un composant optique transparent à cellules remplies de matériau optique, ledit procédé comprenant les étapes suivantes :

   /1/ obtenir un composant optique de base (4) comprenant un ensemble de cellules (1) séparées et juxtaposées parallèlement à une surface dudit composant (S1), chaque cellule étant ouverte avec une section d'ouverture parallèle à la surface du composant ; et
   /2/ introduire un matériau optique à l'intérieur de chaque cellule (1) jusqu'à un niveau moyen de remplissage ($h_1$,..., $h_5$) déterminé pour ladite cellule, et mesuré selon une direction (N) perpendiculaire à la surface du composant,

   le procédé étant **caractérisé en ce que** des variations aléatoires ou pseudo-aléatoires des niveaux moyens de remplissage des cellules ($h_1$,.... $h_5$) sont volontairement introduites entre certaines au moins des cellules du composant (1), de façon à réduire une diffusion lumineuse pour améliorer une transparence dudit composant,
   et **en ce que** les variations des niveaux de remplissage ($h_1$,..., $h_5$) entre des cellules différentes du composant sont déterminées de sorte que des déphasages subis par des rayons d'une lumière visible ($R_1$,..., $R_5$) traversant respectivement les cellules (1) selon ladite direction perpendiculaire à la surface du composant (N) présentent un écart quadratique moyen inférieur à un quart d'une longueur d'onde ($\lambda$) de ladite lumière.

2. Procédé selon la revendication 1, **caractérisé en ce que** les variations des niveaux de remplissage ($h_1$,.... $h_5$) sont déterminées de sorte que les déphasages subis par les rayons de lumière visible ($R_1$,..., $R_5$) traversant respectivement les cellules (1) selon la direction perpendiculaire à la surface du composant (N) présentent un écart quadratique moyen inférieur à un huitième de la longueur d'onde ($\lambda$), et préférentiellement inférieur à un quatorzième de la longueur d'onde ($\lambda$).

3. Procédé selon la revendication 1 ou 2, suivant lequel les niveaux de remplissage respectifs des cellules ($h_1$,..., $h_5$) sont déterminés numériquement.

4. Procédé selon l'une quelconque des revendications précédentes, suivant lequel le matériau optique est introduit dans chaque cellule (1) à l'étape /2/ sous forme de multiples portions ayant chacune un même volume élémentaire, et suivant lequel les variations des niveaux de remplissage ($h_1$,..., $h_5$) sont réalisées en variant le nombre de portions introduites dans des cellules différentes du composant (1), ledit volume élémentaire étant compris entre 0,1 et 50 picolitres.

5. Procédé selon l'une quelconque des revendications précédentes, suivant lequel le matériau optique est introduit dans chaque cellule (1) à l'étape /2/ en utilisant une buse à projection de matière.

6. Procédé selon l'une quelconque des revendications précédentes, comprenant en outre l'étape suivante :

/3/ fermer les cellules (1) de façon étanche au moyen d'une portion d'un matériau de fermeture s'étendant sur la section d'ouverture de chaque cellule.

**7.** Procédé selon la revendication 6, suivant lequel l'étape /3/ comprend une disposition d'un film transparent (5) sur l'ensemble des cellules (1), ledit film étant fixé sur des parois (2) de séparation situées entre les cellules.

**8.** Procédé selon l'une quelconque des revendications précédentes, suivant lequel le composant optique transparent comprend une lentille.

**9.** Procédé selon la revendication 8, suivant lequel le composant optique transparent comprend un verre de lunettes ophtalmiques.

**10.** Procédé selon l'une quelconque des revendications précédentes, suivant lequel le composant optique de base comprend une structure en couche (4) incorporant elle-même l'ensemble de cellules (1), et suivant lequel ladite structure en couche est fixée sur un substrat (3) du composant optique après l'étape /2/.

**11.** Composant optique transparent comprenant un ensemble de cellules (1) séparées et juxtaposées parallèlement à une surface (S1) dudit composant, chaque cellule étant remplie avec un matériau optique jusqu'à un niveau moyen de remplissage ($h_1$,..., $h_5$) mesuré pour ladite cellule selon une direction (N) perpendiculaire à la surface du composant,
les niveaux moyens de remplissage des cellules ($h_1$,..., $h_5$) présentant des variations aléatoires ou pseudo-aléatoires entre certaines au moins des cellules du composant (1),
le composant étant **caractérisé en ce que** les variations des niveaux de remplissage ($h_1$,..., $h_5$) entre des cellules différentes sont adaptées de sorte des déphasages subis par des rayons d'une lumière visible ($R_1$,..., $R_5$) traversant respectivement les cellules (1) selon ladite direction perpendiculaire à la surface du composant (N) présentent un écart quadratique moyen inférieur à un quart d'une longueur d'onde ($\lambda$) de ladite lumière,
et **en ce que** les variations des niveaux de remplissage ($h_1$,..., $h_5$) sont multiples d'un même volume élémentaire, ledit volume élémentaire étant compris entre 0,1 et 50 picolitres.

**12.** Composant selon la revendication 11, **caractérisé en ce que** les variations des niveaux de remplissage ($h_1$,..., $h_5$) sont adaptées de sorte que les déphasages subis par les rayons de lumière visible ($R_1$,..., $R_5$) traversant respectivement les cellules (1) selon la direction perpendiculaire à la surface du composant (N) présentent un écart quadratique moyen inférieur à un huitième de la longueur d'onde ($\lambda$), et préférentiellement inférieur à un quatorzième de la longueur d'onde ($\lambda$).

**13.** Composant selon la revendication 11 ou 12, comprenant en outre un film transparent (5) disposé sur l'ensemble des cellules (1), et fixé sur des parois de séparation (2) situées entre les cellules de manière à fermer chaque cellule de façon étanche.

**14.** Composant selon l'une quelconque des revendications 11 à 13, comprenant une lentille.

**15.** Composant selon la revendication 14, comprenant un verre de lunettes ophtalmiques.

**16.** Composant selon l'une quelconque des revendications 11 à 15, comprenant un substrat (3) et une structure en couche (4) dans laquelle est formé l'ensemble des cellules (1), ladite structure en couche étant fixée sur ledit substrat.

**Patentansprüche**

**1.** Verfahren zur Herstellung einer transparenten optischen Komponente mit mit einem optischen Material gefüllten Zellen, wobei das Verfahren die folgenden Schritte aufweist:

/1/ Erhalten einer optischen Basiskomponente (4), umfassend eine Anordnung von Zellen (1), die getrennt sind und nebeneinander parallel zu einer Fläche der Komponente (S1) angeordnet sind, wobei jede Zelle mit einem Öffnungsabschnitt, der parallel zu der Fläche der Komponente ist, offen ist; und
/2/ Einführen eines optischen Materials in das Innere jeder Zelle (1) bis zu einer mittleren Füllhöhe ($h_1$, ..., $h_5$), die für die Zelle bestimmt wird und in einer Richtung (N) gemessen wird, die senkrecht zu der Fläche der Komponente ist,

wobei das Verfahren **dadurch gekennzeichnet ist, dass** zufällige oder pseudozufällige Variationen der mittleren Füllhöhen der Zellen ($h_1$, ..., $h_5$) zwischen mindestens einigen der Zellen der Komponente (1) absichtlich eingeführt werden, um eine Lichtstreuung zu reduzieren, um eine Transparenz der Komponente zu verbessern,

und dass die Variationen der Füllhöhen ($h_1$, ..., $h_5$) zwischen verschiedenen Zellen der Komponente derart bestimmt werden, dass die Phasenverschiebungen, die von den Strahlen eines sichtbaren Lichts ($R_1$, ..., $R_5$) erlitten werden, das jeweils durch die Zellen (1) in der Richtung hindurchgeht, die senkrecht zu der Fläche der Komponente (N) ist, eine mittlere quadratische Abweichung von weniger als einem Viertel einer Wellenlänge (A) des Lichts aufweisen.

2. Verfahren nach Anspruch 1, **dadurch gekennzeichnet, dass** die Variationen der Füllhöhen ($h_1$, ..., $h_5$) derart bestimmt werden, dass die Phasenverschiebungen, die von den Strahlen eines sichtbaren Lichts ($R_1$, ..., $R_5$) erlitten werden, das jeweils durch die Zellen (1) in der Richtung hindurchgeht, die senkrecht zu der Fläche der Komponente (N) ist, eine mittlere quadratische Abweichung von weniger als einem Achtel der Wellenlänge (A) und vorzugsweise von weniger als einem Vierzehntel der Wellenlänge (A) aufweisen.

3. Verfahren nach Anspruch 1 oder 2, wobei die jeweiligen Füllhöhen der Zellen ($h_1$, ..., $h_5$) numerisch bestimmt werden.

4. Verfahren nach einem der vorhergehenden Ansprüche, wobei das optische Material in jede Zelle (1) in dem Schritt /2/ in Form von mehreren Portionen eingeführt wird, die jeweils ein gleiches Elementarvolumen aufweisen, und wobei die Variationen der Füllhöhen ($h_1$, ..., $h_5$) erstellt werden, indem die Anzahl von Portionen variiert wird, die in verschiedene Zellen der Komponente (1) eingeführt werden, wobei das Elementarvolumen zwischen 0,1 und 50 Picolitern beträgt.

5. Verfahren nach einem der vorhergehenden Ansprüche, wobei das optische Material in jede Zelle (1) in dem Schritt /2/ eingeführt wird, indem eine Düse zum Sprühen von Material verwendet wird.

6. Verfahren nach einem der vorhergehenden Ansprüche, ferner umfassend den folgenden Schritt:

/3/ Abdichten der Zellen (1) mittels einer Portion eines Verschlussmaterials, das sich über den Öffnungsabschnitt von jeder Zelle erstreckt.

7. Verfahren nach Anspruch 6, wobei der Schritt /3/ ein Anordnen einer transparenten Folie (5) auf der Anordnung von Zellen (1) aufweist, wobei die Folie auf Trennwänden (2) befestigt wird, die zwischen den Zellen angeordnet sind.

8. Verfahren nach einem der vorhergehenden Ansprüche, wobei die transparente optische Komponente eine Linse aufweist.

9. Verfahren nach Anspruch 8, wobei die transparente optische Komponente ein ophthalmisches Brillenglas aufweist.

10. Verfahren nach einem der vorhergehenden Ansprüche, wobei die optische Basiskomponente eine Schichtstruktur (4) aufweist, die selbst die Anordnung von Zellen (1) enthält, und wobei die Schichtstruktur auf einem Substrat (3) der optischen Komponente nach dem Schritt /2/ befestigt wird.

11. Transparente optische Komponente, umfassend eine Anordnung von Zellen (1), die getrennt sind und nebeneinander parallel zu einer Fläche (S1) der Komponente angeordnet sind, wobei jede Zelle mit einem optischen Material bis zu einer mittleren Füllhöhe ($h_1$, ..., $h_5$) gefüllt ist, die für die Zelle in einer Richtung (N) gemessen ist, die senkrecht zu der Fläche der Komponente ist,

wobei die mittleren Füllhöhen der Zellen ($h_1$, ..., $h_5$) zufällige oder pseudozufällige Variationen zwischen mindestens einigen der Zellen der Komponente (1) aufweisen,

wobei die Komponente **dadurch gekennzeichnet ist, dass** die Variationen der Füllhöhen ($h_1$, ..., $h_5$) zwischen verschiedenen Zellen derart geeignet sind, dass die Phasenverschiebungen, die von den Strahlen eines sichtbaren Lichts ($R_1$, ..., $R_5$) erlitten werden, das jeweils durch die Zellen (1) in der Richtung hindurchgeht, die senkrecht zu der Fläche der Komponente (N) ist, eine mittlere quadratische Abweichung von weniger als einem Viertel einer Wellenlänge (A) des Lichts aufweisen,

und dass die Variationen der Füllhöhen ($h_1$, ..., $h_5$) Vielfache von einem gleichen Elementarvolumen sind, wobei das Elementarvolumen zwischen 0,1 und 50 Picolitern beträgt.

12. Komponente nach Anspruch 11, **dadurch gekennzeichnet, dass** die Variationen der Füllhöhen ($h_1$, ..., $h_5$) derart geeignet sind, dass die Phasenverschiebungen, die von den Strahlen eines sichtbaren Lichts ($R_1$, ..., $R_5$) erlitten

werden, das jeweils durch die Zellen (1) in der Richtung hindurchgeht, die senkrecht zu der Fläche der Komponente (N) ist, eine mittlere quadratische Abweichung von weniger als einem Achtel der Wellenlänge (A) und vorzugsweise von weniger als einem Vierzehntel der Wellenlänge (A) aufweisen.

13. Komponente nach Anspruch 11 oder 12, ferner umfassend eine transparente Folie (5), die auf der Anordnung von Zellen (1) angeordnet ist und auf Trennwänden (2) befestigt ist, die zwischen den Zellen derart angeordnet sind, um jede Zelle abzudichten.

14. Komponente nach einem der Ansprüche 11 bis 13, umfassend eine Linse.

15. Komponente nach Anspruch 14, umfassend ein ophthalmisches Brillenglas.

16. Komponente nach einem der Ansprüche 11 bis 15, umfassend ein Substrat (3) und eine Schichtstruktur (4), in der die Anordnung von Zellen (1) gebildet ist, wobei die Schichtstruktur auf dem Substrat befestigt ist.


## Claims

1. Process for producing a transparent optical component having cells filled with optical material, said process comprising the following steps:

   /1/ obtaining a base optical component (4) comprising a set of cells (1) that are separated and juxtaposed parallel to a surface of said component (S1), each cell being open with an opening cross section parallel to the surface of the component; and
   /2/ introducing an optical material inside each cell (1) up to a mean filling level ($h_1$,..., $h_5$) determined for said cell, and measured along a direction (N) perpendicular to the surface of the component,

   the process being **characterized in that** random or pseudo-random variations of the mean filling levels of the cells ($h_1$, ..., $h_5$) are intentionally introduced between at least some of the cells of the component (1), so as to reduce a light scattering in order to improve a transparency of said component,
   and **in that** the variations of the filling levels ($h_1$, ..., $h_5$) between different cells of the component are determined so that phase shifts experienced by visible light rays ($R_1$, ..., $R_5$) respectively passing through the cells (1) along said direction perpendicular to the surface of the component (N) have a root mean square deviation of less than a quarter of a wavelength ($\lambda$) of said light.

2. Process according to Claim 1, **characterized in that** the variations of the filling levels ($h_1$, ..., $h_5$) are determined so that the phase shifts experienced by the visible light rays ($R_1$, ..., $R_5$) respectively passing through the cells (1) along the direction perpendicular to the surface of the component (N) have a root mean square deviation of less than an eighth of the wavelength ($\lambda$), and preferably of less than a fourteenth of the wavelength ($\lambda$).

3. Process according to Claim 1 or 2, according to which the respective filling levels of the cells ($h_1$,..., $h_5$) are determined digitally.

4. Process according to any one of the preceding claims, according to which the optical material is introduced into each cell (1) in step /2/ in the form of multiple portions each having the same elementary volume, and according to which the variations of the filling levels ($h_1$,..., $h_5$) are achieved by varying the number of portions introduced into the different cells of the component (1), said elementary volume being between 0.1 and 50 picolitres.

5. Process according to any one of the preceding claims, according to which the optical material is introduced into each cell (1) in step /2/ using a material spray nozzle.

6. Process according to any one of the preceding claims, additionally comprising the following step:

   /3/ sealing the cells (1) in a leaktight manner by means of a portion of a sealing material extending over the opening cross section of each cell.

7. Process according to Claim 6, according to which the step /3/ comprises placing a transparent film (5) on the set of cells (1), said film being attached to separating walls (2) located between the cells.

8. Process according to any one of the preceding claims, according to which the transparent optical component comprises a lens.

9. Process according to Claim 8, according to which the transparent optical component comprises an ophthalmic spectacle lens.

10. Process according to any one of the preceding claims, according to which the base optical component comprises a layered structure (4) itself incorporating the set of cells (1), and according to which said layered structure is attached to a substrate (3) of the optical component after step /2/.

11. Transparent optical component comprising a set of cells (1) that are separated and juxtaposed parallel to a surface (S1) of said component, each cell being filled with an optical material up to a mean filling level ($h_1$,..., $h_5$) measured for said cell along a direction (N) perpendicular to the surface of the component,
the mean filling levels of the cells ($h_1$,..., $h_5$) having random or pseudo-random variations between at least some of the cells of the component (1),
the component being **characterized in that** the variations of the filling levels ($h_1$,..., $h_5$) between different cells are adapted so that phase shifts experienced by visible light rays ($R_1$,..., $R_5$) respectively passing through the cells (1) along said direction perpendicular to the surface of the component (N) have a root mean square deviation of less than a quarter of a wavelength ($\lambda$) of said light,
and **in that** the variations of the filling levels ($h_1$,..., $h_5$) are multiples of one and the same elementary volume, said elementary volume being between 0.1 and 50 picolitres.

12. Component according to Claim 11, **characterized in that** the variations of the filling levels ($h_1$,..., $h_5$) are adapted so that the phase shifts experienced by the visible light rays ($R_1$,..., $R_5$) respectively passing through the cells (1) along the direction perpendicular to the surface of the component (N) have a root mean square deviation of less than an eighth of the wavelength ($\lambda$), and preferably of less than a fourteenth of the wavelength ($\lambda$).

13. Component according to Claim 11 or 12, additionally comprising a transparent film (5) placed on the set of cells (1), and attached to separating walls (2) located between the cells so as to seal each cell in a leaktight manner.

14. Component according to any one of Claims 11 to 13, comprising a lens.

15. Component according to Claim 14, comprising an ophthalmic spectacle lens.

16. Component according to any one of Claims 11 to 15, comprising a substrate (3) and a layered structure (4) in which the set of cells (1) is formed, said layered structure being attached to said substrate.

FIG.1.

FIG.2.

## RÉFÉRENCES CITÉES DANS LA DESCRIPTION

**Documents brevets cités dans la description**

- FR 2872259
- US 20060006336 A1
- US 5914802 A

**Littérature non-brevet citée dans la description**

- **J-P. PEREZ.** ptique, Fondements et applications. Octobre 2004, 262